# EUROPEAN PATENT APPLICATION

(11) **EP 4 806 867 A1**
(43) Date of publication of application: **16.09.2026**
(21) Application number: 25163747.6
(22) Date of filing: 14.03.2025
(51) Int. Cl.: C04B 41/00, C04B 41/53, C04B 41/72, B28B 7/36

(54) **REUSABLE FILM FORMING COMPOSITION FOR EXPOSED TEXTURING CONCRETE**

(71) Applicant: Mapei S.p.A., 20158 Milano (IT)
(72) Inventor: CLEMENTE, Paolo, 20158 Milano (IT); BRUSCO, Iole, 20158 Milano (IT); TORELLI, Luca, 20158 Milano (IT); FERRARI, Giorgio, 20158 Milano (IT); SQUINZI, Marco, 20158 Milano (IT)
(74) Representative: Bianchetti & Minoja with Trevisan & Cuonzo IPS SRL

(57) **Abstract**

The invention refers to a reusable deactivating composition for the production of washed exposed texturing concrete elements by the negative process comprising:
- a film-forming and retardant composition comprising or consisting of a dispersion of a film-forming polymer latex polymer in an aqueous solution comprising a water-soluble retardant of cement hydration;
- a reactivating composition comprising or consisting of an aqueous solution comprising a water-soluble retardant of cement hydration, wherein the reactivating composition replenishes the water-soluble retardant in the first composition after repeated use of the deactivating composition.

## Description

The present invention refers to a composition and to a deactivating method for the production of washed exposed texturing concrete elements by the negative process.

### BACKGROUND OF THE INVENTION

It is known that concrete surfaces with exposed texturing offer many advantages over conventional concrete. In exposed texturing concrete, coarse aggregates partially stick out from the surface of concrete, while remaining firmly bound in the concrete structure by the cementitious mortar. Such surfaces are more decorative compared to normal concrete, where the appearance just consists of a flat and uniform top. Another advantage of exposed texturing concrete is the roughness of the surface due to the irregular shape of the protruding aggregates, which gives anti-slip properties and makes it particularly suitable for pedestrian slabs for sidewalks and walkways.

Exposed texturing is obtained by removing the upper layer of the mortar from the fresh concrete elements until the aggregates become exposed. This is accomplished by washing away the cementitious mortar with low pressure water within the first days after casting, when it is still not completely hardened. Special care is necessary to avoid the removal of excessive amount of fresh mortar by washing, which could cause the detachment of the aggregates from the surface of concrete. Moreover, washings must be made within a narrow time frame, when the set of cement has been completed but the hardening process has not proceeded to the point where it is no longer possible to wash away the mortar by low pressure washings.

Surface deactivators are applied onto the surface of fresh concrete to allow and make easier the production of exposed texturing concrete. They penetrate inside the concrete and retard the hydration of the first layer of the cement below the surface. By this way, the surface mortar remains soft and can be easily washed away, laying bare the aggregates.

In the "positive deactivating method", the surface deactivator is applied directly over the surface of the fresh concrete element. After setting and early hardening of concrete, the first millimeters of mortar can be easily removed by washing or brushing because of the surface retarding effect by the deactivator. On the other hand, the underlayer which has not been reached by the additive develops higher mechanical strength and it resists to washings. The result is the exposed texturing of the aggregates, which partially stick out from the surface of concrete, while remaining firmly bound in the concrete structure by the cementitious mortar, thus creating the desired aesthetic and functional effects.

EP 2632876B1 describes an emulsified surface deactivator and a method of retarding the hardening of surfaces of hydraulic compositions by positive deactivating effect. The surface deactivator consists of an oily phase comprising a non-quaternary amine surfactant, emulsified with an acid with a set-retarding effect on hydraulic compositions and a sugar compound. The surface deactivator is applied on the surface of the fresh concrete by spraying and can be removed both by washing away with water and in dry conditions, once concrete has set and hardened.

The positive deactivating method has the disadvantage that it can be applied only on horizontal surface, as the surface deactivator must be applied on the fresh concrete surface. Moreover, if the surface of concrete to be exposed is large, it is not easy to homogeneously apply the deactivator on the whole surface and waste of material outside the frame of the concrete element is unavoidable.

**In** the "negative deactivating method" the surface deactivator is applied directly on the casting molds. Once the concrete has been placed, the surface deactivator migrates from the mold to the fresh concrete surface, producing the same retardation effect on cement hydration as in the positive deactivating method. After demolding the hardened concrete, the same washing away or brushing procedures as for the positive deactivating method can be applied, giving equivalent results. The advantage of the negative deactivating method is that it is possible to produce exposed texturing concrete of any shape and size, both horizontal and vertical, which is not feasible with the positive deactivating method, which can be applied only on horizontal surfaces.

One major drawback of the negative deactivating method is the necessity of cleaning the formworks after the use of the surface deactivator which, due to the retarding effect on cement hydration, quite often leave residues of weakly bound cementitious paste and mortar after demolding.

Utility model DE 202010015781U1 describes a liquid negative deactivator, based on polyvinylalcohol and hydration retarders, which creates a film-forming separation between the formwork surface and the concrete surface so that, at the time of demolding, the film with the retarder transfers, as completely as possible, to the concrete element and its surface, with the advantage that the shuttering cleaning can be significantly reduced. The concrete texturing surface produced in this way can be then obtained by the conventional process of washing away the surface with low pressure water. The main limitation of the invention is that the composition is not recyclable, and the new application of the film-forming polymer is necessary for the next casting of concrete, with consequent increase of costs.

### DESCRIPTION OF THE INVENTION

The present invention refers to a recyclable composition and to a deactivating method for the production of washed exposed texturing concrete elements by the negative process, which overcomes the drawbacks of the prior art.

In a first embodiment, the invention provides a reusable deactivating composition for the production of washed exposed texturing concrete elements by the negative process comprising:
- a film-forming and retardant composition comprising or consisting of a dispersion of a film-forming polymer latex in an aqueous solution comprising a water-soluble retardant of cement hydration;
- a reactivating composition comprising or consisting of an aqueous solution comprising a water-soluble retardant of cement hydration, wherein the reactivating composition replenishes the water-soluble retardant in the first composition after repeated use of the deactivating composition.

In a second embodiment, the invention provides a method for the production of washed exposed texturing concrete elements by the negative process comprising:
a) Providing a composition comprising a film-forming water dispersion of polymer latex and a water-soluble retardant of cement hydration;
b) Applying the composition to a formwork to form a polymer film;
c) Applying a cement composition onto the polymer film formed in the formwork;
d) Curing and demolding the concrete slab obtained in step c) to be subjected to wash out;
e) Applying a reactivating solution comprising a water-soluble retardant of cement hydration to the formwork after step d);
f) Repeating steps c)-e).

### DETAILED DESCRIPTION OF THE INVENTION

The negative deactivator of the invention comprises a formulation based on a permanent film-forming agent and a retarder of cement hydration. The permanent film-forming agent is a stable water-based polymer dispersion in which the retarded can be dissolved. When applied to the mold, the polymer dispersion coalesces onto the surface of the mold creating a continuous flexible film which strongly adheres to the formwork surface, keeping inside the retarder. After casting, the water-soluble retarder migrates to the surface of concrete, causing the retardation of a millimetric surface layer of the cement paste for the formation of the exposed aggregates texturing of washed concrete. On demolding the formworks, the flexible film of the composition of the invention remains tightly adhered to the surface of the formwork and can be reused many times. Before proceeding to next batches of production of exposed texturing washed concrete, it is necessary to restore the retarding component of the invention. This can be easily accomplished by newly applying a proper amount of retarding agent by spraying, brushing or other convenient methods. Once the film membrane has absorbed the dosage of retardant, the next concrete can be casted in the mold and new exposed texturing concrete element can be produced.

This process can be repeated many times, typically from 10 to 20 cycles, depending on the operating conditions, such as the type of concrete, vibration intensity and curing temperature. Once it is necessary to replace the old film with a new one, it is sufficient to peel off the old membrane from the formwork and to proceed with a new application of the negative deactivator of the invention.

The film-forming agent of the invention is preferably based on polyvinyl butyral PVB, a polymer characterized by excellent binding and adhesion properties, whose repeating unit is represented in Formula [1].

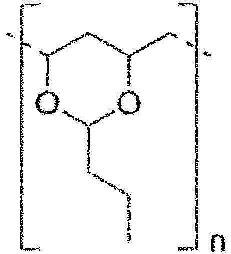

PVB polymers with different molecular weight, ranging from Mw 20000 Dalton to Mw 200000 Dalton and hydroxyl content ranging from 5 to 30% can be used. PVB can be used as linear polymer or partially crosslinked to improve its resistance for the specific application. Crosslinking can be achieved by the use of peroxides, aldehydes, dialdehydes, tri-aldehydes or by thermal curing.

Beside virgin PVB produced by reacting polyvinyl alcohol with butyraldehyde, also recycled PVB coming from the recovery of car windshields and other glass reinforced elements can be used.

According to the invention, PVB may be in the form of a water-based dispersions, optionally formulated with surfactants and dispersing agents to improve their stability. Plasticizers, coalescing agents and crosslinking agents may also be added to the formulation to modify the filming properties, according to the specific application. Moreover, antimicrobial agents can be added to preserve the formulation from microbial growth.

Other film forming polymers latexes, such as those based on natural rubber, styrene-butadiene rubber, pre-vulcanized natural rubber, polyurethane dispersions, waterborne styrene-acrylic, styrene-acrylic-butadiene, waterborne acrylics, ethylene vinyl acetate homopolymers and copolymers, vinyl versatate copolymers and mixtures thereof can be used according to the invention, possibly in combination with polyvinyl butyral polymers. The molecular weight of the polymers in the range from 20000 to 200000 Dalton, preferably from 25000 to 175000 Dalton, more preferably from 30000 to 150000 Dalton.

Retardants include water-soluble carbohydrates and their derivatives such as sucrose, glucose, fructose, maltose, glucose syrup, dextrins, gluconic acid, glucoheptonic acid, saccharic acid and their alkali and earth-alkali salts and mixtures thereof. Other retardants include water-soluble salts of phosphonic acid, including methyl-phosphonic acid (MPA), ethyl-phosphonic acid (EPA), hexyl-phosphonic acid (HPA), phenyl-phosphonic acid (PPA), methylene-diphosphonic acid (MDPA), 1-hydroxyethyl-1,1-diphosphonic acid (HEDP), 2-hydroxyethyl-imino-dimethylene-bis-phosphonic acid (HEMPA), ethylenebis-nitrilobis-methylene-tetrakis-phosphonic acid (EDTMP), 2-phosphonobutyl-1,2,4-tricarboxylic acid (PBTC), carboxy-phosphonic acid, aminomethyl-phosphonic acid (AMPA) and mixtures thereof. Other retardants include borax, borate salts and esters and mixtures thereof.

The proportion of the water-soluble retardant of cement hydration is in the range from 0.1 to 20%, preferably from 0.5 to 10%, more preferably from 1 to 3% by weight of the film-forming latex polymer.

The composition of the invention may also contain rheology modifiers such as associative thickeners, acrylic/acrylamide copolymers, hydrophobically modified alkali swellable emulsions HASE, alkali swellable emulsions ASE, cellulose and cellulose ethers, clay additives and amorphous or colloidal silica and mixtures thereof.

The reusable film forming composition for exposed surface texturing concrete of the invention can be applied on the formworks in different ways by rolling, brushing or spraying and in different amount, ranging from 50 g/m² to 1000 g/m², preferably from 100 g/m² to 500 g/m², more preferably from 150 g/m² to 300 g/m².

The filming speed can vary from 15 to 500 minutes, preferably from 30 to 300 minute, more preferably from 90 to 210 minute, according to the film thickness and the temperature and relative humidity conditions.

The invention is described in more detail in the following examples.

### Example 1 - Preparation of the reusable deactivating composition

2.0 parts by weight microsilica were added under stirring to 96.5 parts by weight polyvinyl butyral water dispersion with total solids content 47.5 % and pH = 9.5. After mixing, 1.0 part by weight sucrose was dissolved in 5 minutes and 0.5 parts by weight thickening agent were added under stirring. The resulting milky and stable dispersion had the characteristics reported in Table 1.

**Table 1. Characteristics of the deactivating composition of the invention.**

| **Parameter** | **Value** |
|---|---|
| pH (units of pH) | 9.5 units |
| Brookfield viscosity (mPa.s) | 9500 mPa.s |
| Total solids (%) | 45 |
| Density (kg/L) | 1.05 |

### Example 2

The composition of Example 1 was applied by roller on metallic formworks at different dosages, in the range from 100 to 300 g/m² and let dry at the temperature of 23 °C and 50 % R.H. All the applications left a uniform and transparent film perfectly bonded to the formwork. The filming times of the different applications are reported in Table 2.

**Table 2. Filming time of the different applications of formulation of Example 1.**

| **Dosage of formulation of Example 1 (g/m²)** | **Filming time (minutes)** |
|---|---|
| 100 | 90 |
| 150 | 100 |
| 200 | 115 |
| 250 | 120 |
| 300 | 210 |

### Example 3

2.0 parts by weight microsilica and 3.0 parts by weight of a blend of isobutyl esters plasticizing agent were added under stirring to 96.5 parts by weight polyvinyl butyral water dispersion with total solids content 47.5 % and pH = 9.5,. After mixing, 1.0 part by weight sucrose was dissolved in 5 minutes and 0.5 parts by weight thickening agent were added under stirring.

The above formulation was applied by roller on a metallic formwork at the temperature of 10 °C and 50 % R.H. at the dosage of 200 g/m². After 120 minutes from the application, the applied wet milky dispersion turned to a dry transparent film, which resulted homogeneously adhering to the formwork. This example confirms that the reusable film forming composition of the invention can be used also at low temperatures.

### Example 4

A metallic formwork was treated by roller with the formulation of Example 1 at the dosage of 200 g/m². After 115 minutes, when the filming was completed, a concrete mixture was placed. The composition of the concrete mixture is reported in Table 3.

**Table 3. Composition of the concrete mixture.**

| **Component** | **Dosage (kg/m³)** |
|---|---|
| CEM I 42.5R | 350 |
| Sand 0-4 mm | 578 |
| Gravel 6-10 | 1224 |
| Water | 175 |
| Dynamon NRG 1010 superplastizer (*) | 3 |

| | |
|---|---|
| (*) supplied by Mapei S.p.A. | |

After curing for 17 hours at 23 °C and 50 % R.H. the concrete slab is demolded, leaving the film of the present composition completely undamaged and adhered to the formwork. The concrete slab surface is then washed away with water under pressure (50-100 bar), to remove the first deactivate layer wherein the retardant has been transferred, leaving the surface texture of the exposed aggregates. The depth of the deactivation due to the penetration of the retardant was determined according to EN 13036-1 norm by measuring the surface of the concrete slab which is covered by a predetermined volume of sand. The results of the test are shown in Table 4.

**Table 4. Results of the concrete surface deactivation test**

| **Dosage of composition of Example 1** | **Curing conditions of concrete** | **Time of demolding** | **Depth of deactivation** |
|---|---|---|---|
| 200 | 23 °C, 50 % R.H. | 17 hours | 3.0 mm |

### Example 5

2.0 parts by weight microsilica were added under stirring to 96.5 parts by weight of a styrene butadiene carboxylate latex with total solids of 47 % (Lipaton SB29Y141 produced by Synthomer). After mixing, 1.0 part by weight sucrose was dissolved in 5 minutes and 0.5 parts by weight thickening agent were added under stirring. The resulting formulation was applied by roller on metallic formworks at the dosage of 200 g/m² and let dry at the temperature of 23 °C and 50 % R.H. After drying, the film was perfectly bonded to the formwork. The same concrete mixture of Table 3 of Example 4 was applied on the formwork. After curing for 17 hours at 23 °C and 50 % R.H. the concrete slab is demolded, leaving the styrene butadiene carboxylate film completely undamaged and adhered to the formwork. The concrete slab surface is then washed away with water under pressure (50-100 bar), to remove the first deactivate layer wherein the retardant has been transferred, leaving the surface texture of the exposed aggregates. The depth of the deactivation due to the penetration of the retardant was determined according to EN 13036-1 norm by measuring the surface of the concrete slab which is covered by a predetermined volume of sand. The results of the test are shown in Table 5.

**Table 5. Results of the concrete surface deactivation test.**

| **Dosage of composition of Example 5** | **Curing conditions of concrete** | **Time of demolding** | **Depth of deactivation** |
|---|---|---|---|
| 200 | 23 °C, 50 % R.H. | 19 hours | 3.5 mm |

At the end of the last test, the styrene butadiene carboxylate membrane was peeled off from the formwork quite easily, without leaving any residue and the underlying metal surface was perfectly clean and dry.

### Example 6

The polyvinyl butyral film left on the formwork of Example 4 was treated with a sprayable solution containing a retardant with the composition of Table 6.

**Table 6. Reactivating solution composition.**

| **Component** | **Dosage (% by weight)** |
|---|---|
| Water | 91 |
| Glucose | 5 |
| Rheology modifier | 4 |
| NaOH | to pH 7.5 |

The reactivating solution was applied by spraying on the already used film at the dosage of 100 g/m² and let dry for 30 minutes at 23 °C and 50 % R.H. Once the drying process was completed, a new concrete mixture with the composition of Table 3 was poured into the mold over the film. After curing at 23 °C and 50 % R.H., the concrete slab was demolded leaving the undamaged well-bonded film on the metal formwork. The concrete slab is then properly washed away with water under pressure (50 - 100 bar) to remove the first deactivated layer, wherein the retardant has been transferred, leaving the surface texture of the exposed aggregates.

The above-mentioned procedure was repeated for 10 times by using the same membrane, with the results shown in Table 7.

**Table 7. Results of reactivation/deactivation process of the polyvinyl butyral film.**

| **Number of reactivations** | **g/m² of reactivating solution** | **Curing conditions of concrete** | **Demolding time (hours)** | **Depth of deactivation (mm)** | **Film conditions after demolding** |
|---|---|---|---|---|---|
| 1 | 100 | | 17 | 3.0 | |
| 2 | 100 | | 16 | 3.1 | |
| 3 | 100 | | 17 | 3.0 | |
| 4 | 100 | | 17 | 2.9 | |
| 5 | 100 | 23 °C, 50 % R.H. | 16 | 3.0 | Undamaged and well-bonded to the metal formwork |
| 6 | 100 | | 17 | 3.1 | |
| 7 | 100 | | 17 | 2.9 | |
| 8 | 100 | | 16 | 3.0 | |
| 9 | 100 | | 17 | 3.1 | |
| 10 | 100 | | 16 | 3.0 | |

At the end of the last test, the membrane was peeled off from the formwork quite easily, without leaving any residue and the underlying metal surface was perfectly clean and dry.

### Example 7

The procedure described in Example 6 was repeated, with the only difference that the concrete slabs were cured at 10 °C instead of 23 °C. The results are shown in Table 8.

**Table 8. Results of reactivation/deactivation process of the polyvinyl butyral film.**

| **Number of reactivations** | **g/m² of reactivating solution** | **Curing conditions of concrete** | **Demolding time (hours)** | **Depth of deactivation (mm)** | **Film conditions after demolding** |
|---|---|---|---|---|---|
| 1 | 100 | | 24 | 3.1 | |
| 2 | 100 | | 25 | 3.2 | |
| 3 | 100 | | 23 | 3.1 | |
| 4 | 100 | | 24 | 3.0 | |
| 5 | 100 | 10 °C, 50 % R.H. | 24 | 3.1 | Undamaged and well-bonded to the metal formwork |
| 6 | 100 | | 23 | 3.2 | |
| 7 | 100 | | 25 | 3.1 | |
| 8 | 100 | | 23 | 3.2 | |
| 9 | 100 | | 24 | 3.2 | |
| 10 | 100 | | 24 | 3.1 | |

At the end of the last test, the membrane was peeled off from the formwork quite easily, without leaving any residue and the underlying metal surface was perfectly clean and dry.

### Example 8

The procedure described in Example 6 and Example 7 was repeated, with the only difference that the concrete slabs were cured at 35 °C instead of 23 °C. The results are shown in Table 9.

**Table 9. Results of reactivation/deactivation process of the polyvinyl butyral film.**

| **Number of reactivations** | **g/m² of reactivating solution** | **Curing conditions of concrete** | **Demolding time (hours)** | **Depth of deactivation (mm)** | **Film conditions after demolding** |
|---|---|---|---|---|---|
| 1 | 100 | | 10 | 2.9 | |
| 2 | 100 | | 12 | 2.9 | |
| 3 | 100 | | 11 | 3.0 | |
| 4 | 100 | | 10 | 3.0 | |
| 5 | 100 | 35 °C, 50 % R.H. | 11 | 3.0 | Undamaged and well-bonded to the metal formwork |
| 6 | 100 | | 12 | 2.9 | |
| 7 | 100 | | 11 | 2.9 | |
| 8 | 100 | | 12 | 3.0 | |
| 9 | 100 | | 10 | 3.0 | |
| 10 | 100 | | 11 | 2.9 | |

At the end of the last test, the membrane was peeled off from the formwork quite easily, without leaving any residue and the underlying metal surface was perfectly clean and dry.

Results of Examples 7, 8 and 9 clearly show that the composition of the invention can be used many times without the necessity to remove the film and the removal of the film is easy to do, leaving the formwork metal surface clean and immediately available for next applications.

### Example 9

The procedure of Example 4 was repeated, and the film left on the formwork was treated with a sprayable solution containing a phosphonic acid-based retardant with the composition of Table 10.

**Table 10. Reactivating solution composition.**

| **Component** | **Dosage (% by weight)** |
|---|---|
| Water | 92 |
| HEDP | 4 |
| Rheology modifier | 4 |
| NaOH | to pH 7.5 |

The reactivating solution was applied by spraying on the already used film at the dosage of 100 g/m² and let dry for 30 minutes at 23 °C and 50 % R.H. Once the drying process was completed, a new concrete mixture with the composition of Table 3 was poured into the mold over the film. After curing at 23 °C and 50 % R.H., the concrete slab was demolded leaving the undamaged well-bonded film on the metal formwork. The concrete slab was then properly washed away with water under pressure (50 - 100 bar) to remove the first deactivated layer, wherein the retardant had been transferred, leaving the surface texture of the exposed aggregates.

The above-mentioned procedure was repeated for 10 times by using the same membrane, with the results shown in Table 11.

**Table 11. Results of reactivation/deactivation process of the polyvinyl butyral film.**

| **Number of reactivations** | **g/m² of reactivating solution** | **Curing conditions of concrete** | **Demolding time (hours)** | **Depth of deactivation (mm)** | **Film conditions after demolding** |
|---|---|---|---|---|---|
| 1 | 100 | | 18 | 3.1 | |
| 2 | 100 | | 17 | 3.2 | |
| 3 | 100 | | 18 | 3.1 | |
| 4 | 100 | | 17 | 3.2 | |
| 5 | 100 | 23 °C, 50 % R.H. | 18 | 3.2 | Undamaged and well-bonded to the metal formwork |
| 6 | 100 | | 17 | 3.3 | |
| 7 | 100 | | 18 | 3.1 | |
| 8 | 100 | | 16 | 3.2 | |
| 9 | 100 | | 18 | 3.2 | |
| 10 | 100 | | 18 | 3.1 | |

## Claims

1. A reusable deactivating composition for the production of washed exposed texturing concrete elements by the negative process comprising:
- a film-forming and retardant composition comprising or consisting of a dispersion of a film-forming polymer latex polymer in an aqueous solution comprising a water-soluble retardant of cement hydration;
- a reactivating composition comprising or consisting of an aqueous solution comprising a water-soluble retardant of cement hydration, wherein the reactivating composition replenishes the water-soluble retardant in the first composition after repeated use of the deactivating composition.

2. Reusable deactivating composition according to claim 1, wherein the film forming latex polymer is selected from polyvinyl butyral polymers, natural rubber, styrene-butadiene rubber, pre-vulcanized natural rubber, polyurethane dispersions, waterborne styrene-acrylic, styrene-acrylic-butadiene latexes, waterborne acrylics, ethylene vinyl acetate homopolymers and copolymers, vinyl versatate copolymers and mixtures thereof.

3. Reusable deactivating composition according to claim 1 or 2, wherein the film-forming polymer is **characterized by** linear or crosslinked structure or mixtures thereof and has molecular weight in the range from 20000 to 200000 Dalton, preferably from 25000 to 175000 Dalton, more preferably from 30000 to 150000 Dalton.

4. Reusable deactivating composition according to any of the previous claims, wherein the water-soluble retardant of cement hydration is selected from sucrose, glucose, fructose, maltose, glucose syrup, dextrins, hydroxycarboxylic acids including gluconic acid, glucoheptonic acid, saccharic acid and their alkali and earth-alkali salts and esters.

5. Reusable deactivating composition according to any of the claims 1-3 , wherein the water-soluble retardant of cement hydration is a water-soluble salt of phosphonic acid, including methyl-phosphonic acid (MPA), ethyl-phosphonic acid (EPA), hexyl-phosphonic acid (HPA), phenyl-phosphonic acid (PPA), methylene-diphosphonic acid (MDPA), 1-hydroxyethyl-1,1-diphosphonic acid (HEDP), 2-hydroxyethyl-imino-dimethylene-bis-phosphonic acid (HEMPA), ethylenebis-nitrilobis-methylene-tetrakis-phosphonic acid (EDTMP), 2-phosphonobutyl-1,2,4-tricarboxylic acid (PBTC), carboxy-phosphonic acid, aminomethyl-phosphonic acid (AMPA) and mixtures thereof.

6. Reusable deactivating composition according to any of claims 1-3, wherein the water-soluble retardant of cement hydration is a water-soluble borate, borax, borate esters and mixture thereof.

7. Reusable deactivating composition according to any of the previous claims, wherein the proportion of the water-soluble retardant of cement hydration is in the range from 0.1 to 20%, preferably from 0.5 to 10%, more preferably from 1 to 3% by weight of the film-forming latex polymer.

8. Reusable deactivating composition according to any of the previous claims, wherein the film-forming water dispersion contains surfactants, plasticizers, coalescing agents, crosslinking agents.

9. A method for the production of washed exposed texturing concrete elements by the negative process comprising:
a) Providing a composition comprising a film-forming water dispersion of polymer latex and a water-soluble retardant of cement hydration;
b) Applying the composition to a formwork to form a polymer film;
c) Applying a cement composition onto the polymer film formed in the formwork;
d) Curing and demolding the concrete slab obtained in step c) to be subjected to wash out;
e) Applying a reactivating composition comprising a water-soluble retardant of cement hydration to the formwork after step d);
f) Repeating steps c)-e).

10. A method according to claim 9 wherein the composition comprising a film-forming water dispersion of polymer latex and a water-soluble retardant of cement hydration used in step a) and the reactivating compositions used in step e) are as defined in claims 1-8.
